# EUROPEAN PATENT SPECIFICATION

(11) **EP 4 336 627 B1**
(45) Date of publication and mention of the grant of the patent: **26.02.2025**
(21) Application number: 23193172.6
(22) Date of filing: 24.08.2023
(51) Int. Cl.: H01M 50/00, H01M 50/20, H01M 50/242

(54) **LOWER PROTECTIVE COVER AND BATTERY PACK HAVING SAME**
UNTERE SCHUTZABDECKUNG UND BATTERIEPACK DAMIT
COUVERCLE DE PROTECTION INFÉRIEUR ET BLOC-BATTERIE LE COMPRENANT

(30) Priority: 26.08.2022 KR 20220107690
(43) Date of publication of application: 13.03.2024
(73) Proprietor: Samsung SDI Co., Ltd., Yongin-si, Gyeonggi-do 17084 (KR)
(72) Inventor: Jeon, Jee Hoon, 17084 Yongin-si, Gyeonggi-do (KR); Jeon, Sung Hyun, 17084 Yongin-si, Gyeonggi-do (KR); Ji, Tae Ho, 17084 Yongin-si, Gyeonggi-do (KR)
(74) Representative: Gulde & Partner

(56) References cited:
- DE-A1- 102017 103 654
- DE-A1- 102018 115 919
- US-A1- 2015 135 940

## Description

### Background

### 1. Field

Embodiments relate to a lower protective cover and a battery pack having the same.

### 2. Description of the Related Art

In general, electric vehicles are vehicles that obtain power by driving an AC or DC motor using power supplied from a battery. Electric vehicles may be largely classified into battery-exclusive electric vehicles and hybrid electric vehicles.

Battery-exclusive electric vehicles drive a motor using power from a battery and recharge the battery when the power is exhausted. In the case of the battery-exclusive electric vehicle, a plurality of battery packs may be mounted on a lower portion thereof. The electric vehicle has a high risk of battery damage due to an impact to the lower portion of the vehicle caused by various events while driving, such as striking debris or obstacles in the roadway. Therefore, it is desirable to have a system and method capable of preventing the damage of the battery due to the impact to the lower portion of the electric vehicle.

The above-described information disclosed in the technology that serves as the background of the present disclosure is only for improving understanding of the background of the present disclosure and thus may include information that does not constitute the related art.

DE 10 2017 103 654 A1 discloses a battery housing for a vehicle battery with at least one module holder for holding a battery module, which is delimited at least by a side wall and an intermediate floor, and with an underride guard arranged below the intermediate floor for protection against undesired penetration of objects from below, wherein the underride guard is reinforced in such a way that a force acting on the underride guard from below can be introduced into the side wall and deformation of the intermediate floor is essentially avoided.

US 2015/135940 A1 discloses a battery pack protection system for use with an electric vehicle in which the battery pack is mounted under the car. The system utilizes a plurality of deformable cooling conduits located between the lower surface of each of the batteries and the lower battery pack enclosure panel, with a thermal insulator interposed between the conduits and the lower enclosure panel. The cooling conduits are configured to deform and absorb impact energy when an object, such as road debris, strikes the lower surface of the lower battery pack enclosure panel. Further protection may be achieved by positioning a ballistic shield, alone or with a layer of compressible material, under the bottom surface of the battery pack.

### SUMMARY

According to the invention a battery pack according to independent claim 1 is provided.

The lower panel may have a plate shape. The buffer parts may be provided on a surface of the lower panel facing the battery module.

Some or all of the buffer parts may extend in a longitudinal direction of the lower panel and/or may each have a hollow pipe shape.

The number of concave portions may be the same as the number of concave portions for the left side surface and/or for the right side surface. The left side surface may have the same type of shape as the right side surface. In some embodiments, there may be two or more types of buffer parts having different structures.

The battery pack may also include a number of cooling passages in a lower portion of the battery module, and the cooling passages may be between adjacent buffer parts.

Each of the cooling passages may be sized such that they are not in contact with the lower panel.

### BRIEF DESCRIPTION OF THE DRAWINGS

FIG. 1 illustrates a perspective view of a lower portion of a battery pack according to embodiments of the present disclosure;
FIG. 2 illustrates an exploded perspective view of the battery pack of FIG. 1;
FIG. 3 illustrates a cross-sectional view taken along line A-A' of FIG. 2;
FIG. 4 illustrates an enlarged cross-sectional view of a buffer part of a lower protective cover of FIG. 3;
FIGS. 5 and 6 illustrate enlarged cross-sectional views of a buffer part of a lower protective cover according to other embodiments of the present disclosure;
FIG. 7 illustrates a cross-sectional view of the battery pack and a lower impact generation direction in FIG. 1; and
FIGS. 8A and 8B illustrate a view of a state of main portions when a lower impact occurs in the battery pack of FIG. 7.

### DETAILED DESCRIPTION

Hereinafter, a lower protective cover and a battery pack having the same according to embodiments will be described in detail with reference to the accompanying drawings.

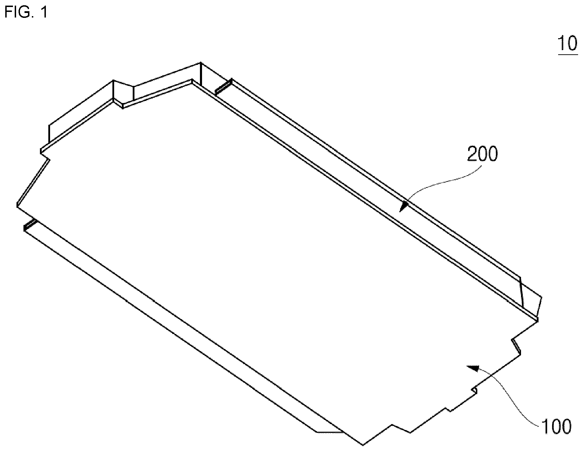

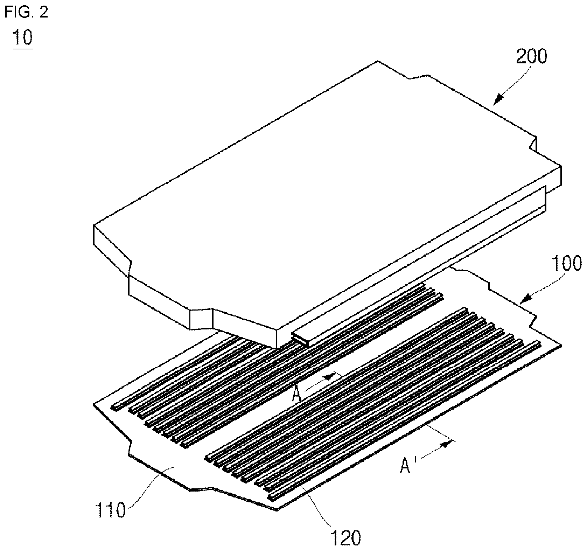

FIG. 1 illustrates a perspective view of a lower portion of a battery pack according to embodiments. FIG. 2 illustrates an exploded perspective view of the battery pack of FIG. 1.

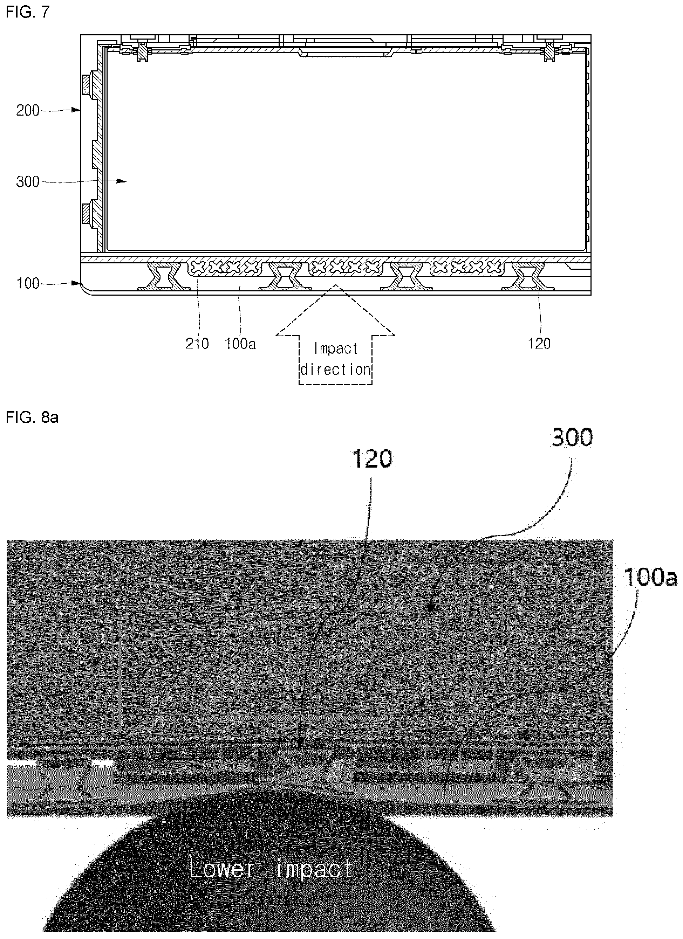

Referring to FIGS. 1 and 2, a battery pack 10 according to embodiments may include a lower protective cover 100 seated on an installation surface of a vehicle, etc., and a battery module 200 that accommodates and covers a plurality of battery cells 300 (see FIG. 7). The lower protective cover 100 may be detachably coupled to a lower portion of the battery module 200. Thus, when the lower protective cover 100 is damaged, only the lower protective cover 100 may be separated to be replaced.

The lower protective cover 100 may include a lower panel 110 having a substantially rectangular plate shape and a plurality of buffer parts 120 provided on the lower panel 110 (e.g., on an upper surface of the lower panel 110).

The shape of the lower panel 110 may correspond to a lower shape of the battery module 200. Since the lower panel 110 supports the battery module 200 from a lower side, the lower panel 110 may have a size capable of completely covering (or substantially completely covering) the lower portion of the battery module 200. Since the lower panel 110 has to be able to prevent the battery module 200 from being damaged, the lower panel 110 may be made of various materials such as steel, aluminum, and a material mixed with various materials (e.g., an alloy). In some embodiments, when the lower panel 110 is made of aluminum, the lower panel 110 may be manufactured through a stamping method. Referring to FIG. 2, the plurality of buffer parts 120 may be coupled to a top surface of the lower panel 110 and extend in a longitudinal direction along the length of the lower panel 110. There may be, for example, between 6 and 20 buffer parts 120 or between 10 and 16 buffer parts 120 arranged on the lower panel. In the embodiment depicted in FIG. 2, there is a total number of 14 buffer parts 120 arranged on the lower panel. The buffer parts 120 may be arranged in two groups, each consisting of half of the total number of buffer parts 120.

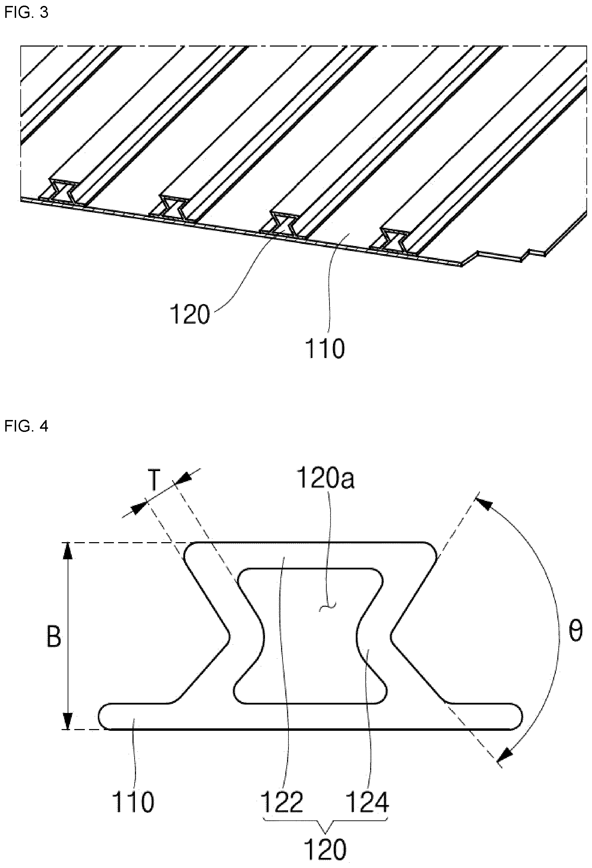

FIG. 3 illustrates a cross-sectional view taken along line A-A' of FIG. 2. FIG. 4 illustrates an enlarged cross-sectional view of the buffer part of the lower protective cover of FIG. 3.

Referring to FIGS. 2 to 4, the plurality of buffer parts 120 may be disposed in the longitudinal direction on the top surface of the lower panel 110. The buffer part 120 may be manufactured through an extrusion method and may be made of the same material as the lower panel 110. In some embodiments, the buffer parts 120 may be coupled to the lower panel 110 by welding. In the illustrated embodiment, each of the buffer parts 120 has a length less than that of the lower panel 110. Each buffer part 120 may have a hollow pipe shape or a hollow prismatic shape. In some embodiments, the buffer parts 120 may have various cross-sectional shapes, but may have a cross-sectional shape capable of absorbing an impact. When the buffer parts 120 are seated on the lower panel 110 (in some embodiments, the buffer part is provided to have a separate bottom surface, but since the bottom surface is welded and connected to the lower panel 110, reference numerals of the bottom surface are omitted for convenience), the buffer parts 120 may include a top surface 122 spaced apart from the bottom surface. The top surface 122 may be facing and parallel to the bottom surface and left and right surfaces 124 connecting the bottom surface to opposite sides or ends of the top surface 122. The buffer part 120 may have a hollow interior 120a having various shapes depending on the shapes of the bottom surface, the top surface 122, and the left and right surfaces 124. Each of the left and right surfaces 124 may be concave inward from an end of the top surface 122 or the bottom surface (e.g., the left and right surfaces 124 may extend concavely inward into the hollow interior 120a). In some embodiments, each of the left and right surfaces 124 may have a shape of which an approximately center in a vertical direction in FIG. 4 is concave. In some embodiments, the hollow interior 120a may have a substantially hourglass-like shape. The shape of the buffer parts 120 having the hollow interiors 120a may have a structure for absorbing an impact applied from the lower side of the lower protective cover 100. That is, the left and right surfaces 124 may absorb the impact while being compressed or deformed in the vertical direction (direction B in FIG. 4) by an impact in a downward direction. In some embodiments, the impact applied to the battery cell 300 may be absorbed by the deformation of the buffer parts 120.

A degree of inward concaveness of each of the left and right surfaces 124 may be indicated by a central angle (theta (θ)) in FIG. 4. The angle theta (θ) is formed by two adjacent sections of the left or right surface 124, respectively. In some embodiments, a thickness of each of the left and right surfaces 124 may be indicated by reference symbol T in FIG. 4. In other words, the left side wall and the right side wall of the buffer part 120 each may have a thickness T. In some embodiments, an angle θ of each of the left and right sides 124 of the buffer part 120 may be in the range of about 90 degrees to about 120 degrees or in the range of about 100 degrees to 110 degrees. In some embodiments, the thickness of each of the left and right surfaces 124 may be in the range of about 1.5 mm to about 3 mm, in the range of about 1.75 mm to 2.5 mm, or in the range of about 2 mm to 2.5 mm. An impact absorption amount may be adjusted by adjusting the angle and thickness of the side surface 124. Exemplary impact absorption amounts for each thickness and angle of the side surface 124 are shown in the table below.

| Thickness (mm) | Angle (°) | Impact absorption amount (kN) |
|---|---|---|
| 1.5 | 90 | 10 |
| 2.0 | 100 | 20 |
| 2.5 | 110 | 30 |
| 3.0 | 120 | 40 |

Referring to FIGS. 1 and 2, the battery module 200 may have a substantially rectangular parallelepiped shape, and the plurality of battery cells 300 may be mounted in the battery module 200. Referring to FIG. 7, a plurality of cooling passages 210 may be provided in the bottom surface of the battery module 200 in the longitudinal direction. The cooling passage 210 may be disposed so as not to overlap the buffer part 120 described above (e.g., one, two or more cooling passages 210 may be between adjacent buffer parts 120). In some embodiments, a protruding width of each of the cooling passages 210 (width in the vertical direction in FIG. 7) may be less than that of the buffer part 120 (width in the vertical direction in FIG. 7). The width may be an extension in the direction from the top surface to the bottom surface of the buffer part 120. That is, in one or more embodiments the cooling passages 210 may be shorter than the buffer parts 120 in the vertical direction B (shown in FIG. 4). In some embodiments, an empty space may be generated between the cooling passage 210 and the buffer 120 (e.g., gaps may be provided between the cooling passages 210 and the buffer parts 120 and/or between the cooling passages 210 and the lower panel 110). The empty space may serve to buffer an impact generated from the lower side of the lower protective cover 100. In some embodiments, the above-described empty space may be defined as an impact absorbing space 100a. The impact absorbing space 100a may be an entire empty space inside the lower protective cover 100 except for the buffer 120 and the cooling passage 210. The above-described arrangement and shape of the cooling passage 210 and the buffer part 120 and the structure of the impact absorbing space 100a may be configured to prevent the cooling passage 210 and the battery cell 300 from being damaged even though the buffer part 120 is deformed by the impact applied from the lower side of the lower protective cover 100.

The buffer part 120 described above may be implemented in various forms.

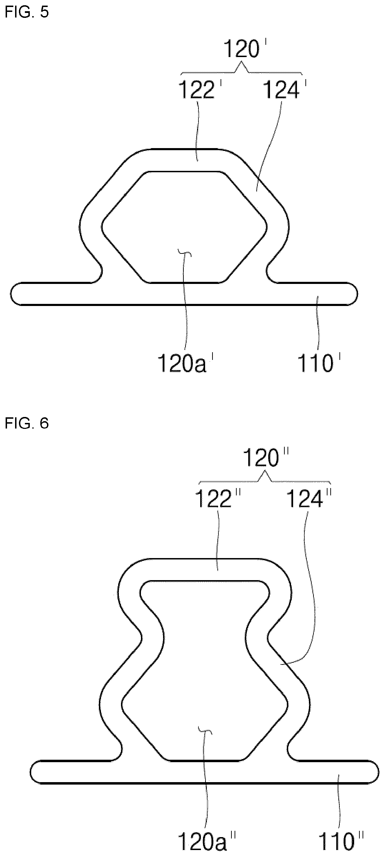

FIGS. 5 and 6 illustrate enlarged cross-sectional views of a buffer part of a lower protective cover according to other embodiments of the present disclosure.

Referring to FIG. 5, a buffer part 120' may include a bottom surface (not separately marked with reference number) parallel to a lower panel 110', a top surface 122' spaced apart from and facing and parallel to the bottom surface, and left and right surfaces 124' connecting the bottom surface to opposite sides or ends of the top surface 122'. In some embodiments, each of the left and right surfaces 124' may have a shape of which an approximately central portion in a vertical direction protrudes outward (e.g., the left and right surfaces 124' may extend convexly outward away from the hollow interior 120a'). In some embodiments, the hollow interior 120a' defined by the top and bottom surfaces 122' and the left and right surfaces 124' may have a substantially hexagonal shape. When an impact occurs from a lower side, the buffer part 120' may also be deformed in the vertical direction in FIG. 5 to absorb the impact.

In some embodiments, referring to FIG. 6, a buffer part 120" may include a bottom surface (not separately marked with reference number) parallel to a lower panel 110", a top surface 122" spaced apart from and facing and parallel to the bottom surface, and left and right surfaces 124" connecting the bottom surface to opposite sides or ends of the top surface 122". In some embodiments, each of the left and right surfaces 124" may have a shape having both an inward concave portion and an outward protruding (convex) portion. Such a shape may be referred to as a concave-convex or wrinkled shape, a zigzag shape, or the like. In some embodiments, each of the concave portion and the convex portion may be repeated (provided in plurality). Each of the concave portion and the convex portion may be, for example, repeated two or three times. In some embodiments, a hollow interior 120a" defined by the top and bottom surfaces 122" and the left and right surfaces 124" may be provided in an irregular (atypical) shape.

By varying the angle theta, the thickness of the side walls and the shape of the buffer parts, e.g. the cross section of the buffer parts, the deformation characteristics of the buffer parts can be designed to achieve efficient protection of the battery module. The parameters mentioned can be adapted with respect to potential forces to be absorbed so that an advantageous ratio between weight, cost and protective effect can be achieved.

In the battery pack according to some embodiments having the above-described configuration, an event in which an impact occurs from a lower side will be described (for convenience, reference numbers in FIGS. 7 to 8B are indicated based on the embodiment of FIG. 5).

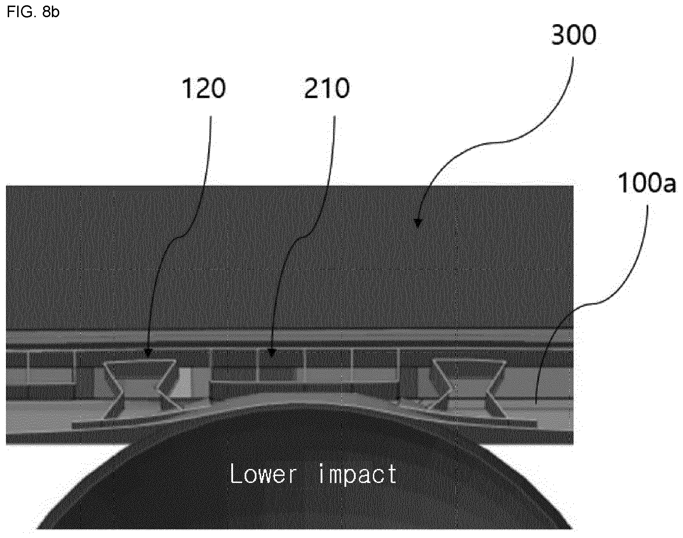

FIG. 7 illustrates a cross-sectional view of the battery pack and a lower impact generation direction in FIG. 1. FIGS. 8A and 8B illustrate a view of a state of battery pack when the lower impact occurs in the battery pack of FIG. 7.

Since the battery pack 10 is mainly mounted on the lower portion of the electric vehicle, the impact may often be transmitted from the lower portion of the battery pack 10 according to conditions of a road surface (e.g., debris or obstacles on the road) referring to FIG. 7. In some embodiments, an impact transmission portion may be a position of the buffer part 120 referring to FIG. 8A or may be a cooling passage 210 between the buffer parts 120 referring to FIG. 8B.

Referring to FIG. 8A, when the impact is transmitted to the position of the buffer part 120, the buffer part 120 may be deformed to absorb the impact, thereby minimizing the transmission of the impact to the cooling passage 210 or the battery cell 300 or preventing the impact from being transmitted to the cooling passage 210 or the battery cell 300.

Referring to FIG. 8B, when the impact is transmitted to the position of the cooling passage 210 between the buffer parts 120, the impact absorbing space 100a may serve as the buffer part 120. In some embodiments, since there are buffer parts 120 at both sides of the impact absorbing space 100a to absorb some impacts, the transmission of impacts to the cooling passage 210 or the battery cell 300 can be minimized or prevented.

According to some embodiments, the structure of the lower protective cover of the battery pack may be improved to absorb the impact from the lower side of the vehicle.

In addition, the cross-sectional shape of the buffer part of the lower protective cover may be changed to adjust and design the impact absorption value.

The battery pack may further comprise a plurality of cooling passages in a lower portion of the battery module, and the cooling passages may be arranged between adjacent buffer parts of the plurality of buffer parts.

Each cooling passage of the plurality of cooling passages in the battery pack may have a size such that is not in contact with the lower panel.

The above-mentioned embodiment is merely an embodiment, and thus, the present disclosure is not limited to the foregoing embodiment, and also it will be understood by those of ordinary skill in the art that various changes in form and details may be made therein without departing from the scope of the present invention as defined by the following claims.

## Claims

1. A battery pack (10) comprising:
a battery module (200) accommodating a plurality of battery cells (300); and
a lower protective cover (100) comprising a lower panel (110, 110') detachably coupled to a lower portion of the battery module (200) and a plurality of buffer parts (120) on one surface of the lower panel (110, 110'), **characterized in that**
each buffer part (120) of the plurality of buffer parts (120) comprises a top surface and a bottom surface each being parallel to the lower panel (110, 110'), and left and right side surfaces (124) connecting the top surface to the bottom surface, and wherein
each of the left and right side surfaces (124) has an inward concave shape and/or an outward convex shape.

2. The battery pack (10) as claimed in claim 1, wherein the lower panel (110, 110') has a plate shape, and the plurality of buffer parts (120) are on a surface of the lower panel (110, 110') facing the battery module (200).

3. The battery pack (10) as claimed in claim 1 or claim 2, wherein each buffer part (120) of the plurality of buffer parts (120) extends in a longitudinal direction of the lower panel (110, 110') and has a hollow pipe shape.

4. The battery pack (10) as claimed in claim 1, wherein each of the left and right side surfaces (124) has a plurality of concave portions and a plurality of convex portions.

5. The battery pack (10) as claimed in any one of the aforementioned claims , further comprising a plurality of cooling passages (210) in a lower portion of the battery module (200), and wherein the cooling passages (210) are between adjacent buffer parts (120) of the plurality of buffer parts (120).

6. The battery pack (10) as claimed in claim 5, wherein each cooling passage (210) of the plurality of cooling passages (210) has a size such that it is not in contact with the lower panel (110, 110').

## Patentansprüche

1. Batteriepack (10), umfassend:
ein Batteriemodul (200), in dem eine Mehrzahl von Batteriezellen (300) aufgenommen ist; und
eine untere Schutzabdeckung (100), die eine untere Platte (110, 110'), die lösbar an einen unteren Abschnitt des Batteriemoduls (200) gekoppelt ist, und eine Mehrzahl von Pufferteilen (120) auf einer Oberfläche der unteren Platte (110, 110') umfasst, **dadurch gekennzeichnet, dass**
jedes Pufferteil (120) der Mehrzahl von Pufferteilen (120) eine Oberseitenfläche und eine Unterseitenfläche, die jeweils parallel zu der unteren Platte (110, 110') sind, und eine linke und eine rechte Seitenfläche (124), welche die Oberseitenfläche mit der Unterseitenfläche verbinden, umfasst, und wobei
jede der linken und rechten Seitenfläche (124) eine nach innen konkave Form und/oder eine nach außen konvexe Form aufweist.

2. Batteriepack (10) nach Anspruch 1, wobei die untere Platte (110, 110') eine Plattenform aufweist und die Mehrzahl von Pufferteilen (120) sich auf einer Oberfläche der unteren Platte (110, 110') befindet, die dem Batteriemodul (200) zugewandt ist.

3. Batteriepack (10) nach Anspruch 1 oder Anspruch 2, wobei jedes Pufferteil (120) der Mehrzahl von Pufferteilen (120) sich in einer Längsrichtung der unteren Platte (110, 110') erstreckt und die Form eines Hohlrohrs aufweist.

4. Batteriepack (10) nach Anspruch 1, wobei jede der linken und rechten Seitenfläche (124) eine Mehrzahl konkaver Abschnitte und eine Mehrzahl konvexer Abschnitte aufweist.

5. Batteriepack (10) nach einem der vorangehenden Ansprüche, das ferner eine Mehrzahl von Kühlkanälen (210) in einem unteren Abschnitt des Batteriemoduls (200) umfasst, und wobei die Kühlkanäle (210) sich zwischen benachbarten Pufferteilen (120) der Mehrzahl von Pufferteilen (120) befinden.

6. Batteriepack (10) nach Anspruch 5, wobei jeder Kühlkanal (210) der Mehrzahl von Kühlkanälen (210) eine Größe derart aufweist, dass er nicht mit der unteren Platte (110, 110') in Kontakt steht.

## Revendications

1. Bloc-batterie (10) comprenant :
un module de batterie (200) recevant une pluralité d'éléments de batterie (300) ; et
un couvercle de protection inférieur (100) comprenant un panneau inférieur (110, 110') accouplé de manière détachable à une portion inférieure du module de batterie (200) et une pluralité de parties tampon (120) sur une surface du panneau inférieur (110, 110'), **caractérisé en ce que**
chaque partie tampon (120) de la pluralité de parties tampon (120) comprend une surface supérieure et une surface inférieure chacune parallèle au panneau inférieur (110, 110'), et des surfaces latérales gauche et droite (124) reliant la surface supérieure à la surface inférieure, et dans lequel
chacune des surfaces latérales gauche et droite (124) présente une forme concave intérieure et/ou une forme convexe extérieure.

2. Bloc-batterie (10) selon la revendication 1, dans lequel le panneau inférieur (110, 110') présente une forme plate, et la pluralité de parties tampon (120) sont sur une surface du panneau inférieur (110, 110') tournée vers le module de batterie (200).

3. Bloc-batterie (10) selon la revendication 1 ou revendication 2, dans lequel chaque partie tampon (120) de la pluralité de parties tampon (120) s'étend dans une direction longitudinale du panneau inférieur (110, 110') et présente une forme de tuyau creux.

4. Bloc-batterie (10) selon la revendication 1, dans lequel chacune des surfaces latérales gauche et droite (124) présente une pluralité de portions concaves et une pluralité de portions convexes.

5. Bloc-batterie (10) selon l'une quelconque des revendications précédentes, comprenant en outre une pluralité de passages de refroidissement (210) dans une portion inférieure du module de batterie (200), et dans lequel les passages de refroidissement (210) sont situés entre des parties tampon (120) adjacentes de la pluralité de parties tampon (120).

6. Bloc-batterie (10) selon la revendication 5, dans lequel chaque passage de refroidissement (210) de la pluralité de passages de refroidissement (210) présente une taille telle qu'il n'est pas en contact avec le panneau inférieur (110, 110').
